# EUROPEAN PATENT SPECIFICATION

(11) **EP 3 678 346 B1**
(45) Date of publication and mention of the grant of the patent: **07.09.2022**
(21) Application number: 19863164.0
(22) Date of filing: 17.06.2019
(51) Int. Cl.: G06F 16/901, G06Q 30/06, G06Q 40/00, H04L 9/32

(54) **BLOCKCHAIN SMART CONTRACT VERIFICATION METHOD AND APPARATUS, AND STORAGE MEDIUM**
VERFAHREN UND VORRICHTUNG ZUR VERIFIZIERUNG VON SMART CONTRACTS EINER BLOCKCHAIN UND SPEICHERMEDIUM
PROCÉDÉ ET APPAREIL DE VÉRIFICATION DE CONTRAT INTELLIGENT DE CHAÎNE DE BLOCS, ET SUPPORT DE STOCKAGE

(30) Priority: 20.09.2018 CN 201811101341
(43) Date of publication of application: 08.07.2020
(73) Proprietor: Baidu Online Network Technology (Beijing) Co., Ltd., Beijing 100085 (CN)
(72) Inventor: JING, Bo, Beijing 100085 (CN)
(74) Representative: Brevalex
(86) International application number: PCT/CN2019/091475
(87) International publication number: WO 2020/057196

(56) References cited:
- CN-A- 106 899 412
- CN-A- 107 077 674
- CN-A- 109 345 388
- US-A1- 2018 139 278

## Description

### CROSS-REFERENCE TO RELATED APPLICATION

This application claims priority to Chinese Patent Application No. 201811101341.2, titled "method and apparatus for verifying smart contracts in blockchain, and storage medium", filed with the Chinese Patent Office on September 20, 2018.

### TECHNICAL FIELD

The present application relates to the field of information technology, and in particular, to a method and apparatus for verifying smart contracts in a blockchain, and a computer readable storage medium.

### BACKGROUND

A blockchain network usually includes a large number of full nodes, which maintain the account book data of a complete blockchain. Complete data of each block will be synchronized to these full nodes in real time, thus the validity of the block may be determined correctly.

Some lightweight nodes may also exist in the blockchain network, such as mobile phone clients. Because of their limited storage space, they cannot store all the historical block data. In addition, the bandwidth of the mobile client is limited, and the traffic cost is high. When the block size is large and the block output speed is fast, it is unrealistic to synchronize the complete data of each block to the mobile client in real time. On the other hand, due to the weak hardware capability of lightweight nodes, it is too expensive to repeatedly execute smart contracts locally to verify whether the execution results of the smart contracts are consistent with a block synchronized from the blockchain.

At present, there are lightweight node technologies in the market, but it is impossible to effectively verify the execution results of smart contracts on a lightweight node without repeatedly executing the smart contracts.

Chinese patent application CN106899412A discloses a blockchain privacy protection method, apparatus and system, the method comprising: an information desensitization terminal receiving original information sent by a blockchain node; the information desensitization terminal constructing a complete first Merkle tree according to the original information; the information desensitization terminal cutting out privacy information in the first Merkle tree, and retaining verification information in the first Merkle tree to acquire a cut-out second Merkle tree; and an information verification terminal verifying the second Merkle tree. By means of cutting out the privacy information in the first Merkle tree, the second Merkle tree, which does not include the privacy information but includes the verification information, is acquired, and during verification, the information verification terminal is prevented from acquiring the privacy information; in addition, verification of the original information of a blockchain is implemented by means of verifying the second Merkle tree including the verification information.

Chinese patent application CN107077674A discloses a lightweight node transaction verification processing method, involves storing node complete block chain, receiving destination trusted node, performing payment verification and transaction verification, and obtaining verification result.

### SUMMARY

A method and apparatus for verifying smart contracts in a blockchain, and a computer readable storage medium are provided according to embodiments of the present application, so as to solve one or more technical problems in the existing technology.

In a first aspect, a method for verifying smart contracts in a blockchain is provided according to an embodiment of the present application, which includes: acquiring block head information and a transaction list of a designated block from a first node in a blockchain network, wherein the transaction list includes transaction identifications and execution results of the smart contracts; and the block head information includes: a root node of a first Merkle tree, a root node of a second Merkle tree, and an identification of a previous block of the designated block; verifying the root node of the first Merkle tree and the transaction identifications, to obtain a first verification result; verifying the root node of the second Merkle tree and the execution results of the smart contracts, to obtain a second verification result; verifying whether the identification of the previous block of the designated block is in a pre-stored block head chain structure, to obtain a third verification result; and determining that the execution results of the smart contracts are valid, if the first verification result, the second verification result and the third verification result are all pass.

In an embodiment, the verifying the root node of the first Merkle tree and the transaction identifications, includes: constructing a third Merkle tree using the transaction identifications in the transaction list, and calculating a root node of the third Merkle tree; comparing whether the root node of the third Merkel tree is consistent with the root node of the first Merkel tree; and determining that a verification of the root node of the first Merkle tree and the transaction identifications is passed, if the root node of the third Merkel tree is consistent with the root node of the first Merkel tree.

In an embodiment, the verifying the root node of the second Merkle tree and the execution results of the smart contracts, includes: constructing a fourth Merkle tree using the execution results of the smart contracts in the transaction list, and calculating a root node of the fourth Merkle tree; comparing whether the root node of the fourth Merkel tree is consistent with the root node of the second Merkel tree; and determining that a verification of the root node of the second Merkle tree and the execution results of the smart contracts is passed, if the root node of the fourth Merkel tree is consistent with the root node of the second Merkel tree.

In an embodiment, before verifying whether the identification of the previous block of the designated block is in a pre-stored block head chain structure, the method further includes: acquiring the block head information of the designated block from the first node and a second node in the blockchain network, respectively; comparing whether the block head information of the designated block in the first node is consistent with the block head information of the designated block in the second node; determining the designated block is valid, if the block head information of the designated block in the first node is consistent with the block head information of the designated block in the second node; and verifying whether the identification of the previous block of the designated block is in the pre-stored block head chain structure, in a case that the designated block is determined to be valid.

In a second aspect, an apparatus for verifying smart contracts in a blockchain is provided according to an embodiment of the present application, which includes: an acquiring unit, configured to acquire block head information and a transaction list of a designated block from a first node in a blockchain network, wherein the transaction list includes transaction identifications and execution results of the smart contracts; and the block head information includes: a root node of a first Merkle tree, a root node of a second Merkle tree, and an identification of a previous block of the designated block; a first verification unit, configured to verify the root node of the first Merkle tree and the transaction identifications, to obtain a first verification result; a second verification unit, configured to verify the root node of the second Merkle tree and the execution results of the smart contracts, to obtain a second verification result; a third verification unit, configured to verify whether the identification of the previous block of the designated block is in a pre-stored block head chain structure, to obtain a third verification result; and a determination unit, configured to determine that the execution results of the smart contracts are valid, if the first verification result, the second verification result and the third verification result are all pass.

In an embodiment, the first verification unit is further configured to: construct a third Merkle tree using the transaction identifications in the transaction list, and calculate a root node of the third Merkle tree; compare whether the root node of the third Merkel tree is consistent with the root node of the first Merkel tree; and determine that a verification of the root node of the first Merkle tree and the transaction identifications is passed, if the root node of the third Merkel tree is consistent with the root node of the first Merkel tree.

In an embodiment, the second verification unit is further configured to: construct a fourth Merkle tree using the execution results of the smart contracts in the transaction list, and calculate a root node of the fourth Merkle tree; compare whether the root node of the fourth Merkel tree is consistent with the root node of the second Merkel tree; and determine that a verification of the root node of the second Merkle tree and the execution results of the smart contracts is passed, if the root node of the fourth Merkel tree is consistent with the root node of the second Merkel tree.

In an embodiment, the apparatus further includes a fourth verification unit, configured to: acquire the block head information of the designated block from the first node and a second node in the blockchain network, respectively; compare whether the block head information of the designated block in the first node is consistent with the block head information of the designated block in the second node; determine the designated block is valid, if the block head information of the designated block in the first node is consistent with the block head information of the designated block in the second node; and verify whether the identification of the previous block of the designated block is in the pre-stored block head chain structure, in a case that the designated block is determined to be valid.

In a possible design, the apparatus structurally includes a processor and a memory, wherein the memory is configured to store programs which support the apparatus to execute the above method, and the processor is configured to execute the programs stored in the memory. The apparatus may further include a communication interface through which the apparatus communicates with other devices or communication networks.

In a third aspect, an apparatus for verifying smart contracts in a blockchain is provided according to an embodiment of the present application, which includes: one or more processors; a storage device configured to store one or more programs; wherein the one or more programs, when executed by the one or more processors, cause the one or more processors to implement any of the above methods described in the first aspect.

In a fourth aspect, a non-volatile computer readable storage medium is provided according to an embodiment of the application, which stores a computer program, wherein the program, when executed by a processor, causes the processor to implement any of the above methods described in the first aspect.

The above technical solutions have the following advantages or beneficial effects: it is not required to download or store the complete block information, nor is it required to repeatedly execute smart contracts locally on a lightweight client, which can help the lightweight node to determine the validity of the execution results of the smart contracts in the blockchain network, thereby saving system resources and improving the execution efficiency.

The above summary is for the purpose of the specification only and is not intended to be limiting in any way. In addition to the illustrative aspects, embodiments, and features described above, further aspects, embodiments, and features of the present application will be readily understood by reference to the drawings and the following detailed description.

### BRIEF DESCRIPTION OF THE DRAWINGS

In the drawings, unless otherwise designated, identical reference numerals will be used throughout the drawings to refer to identical or similar parts or elements. The drawings are not necessarily drawn to scale. It should be understood that these drawings depict only some embodiments disclosed in accordance with the present application and are not to be considered as limiting the scope of the present application.
FIG. 1 shows a flow chart of a method for verifying smart contracts in a blockchain according to an embodiment of the present application.
FIG. 2 shows a flow chart of a method for verifying smart contracts in a blockchain according to another embodiment of the present application.
FIG. 3 shows a flow chart of calculating a second Merkel tree by a full node in a method for verifying smart contracts in a blockchain according to another embodiment of the present application.
FIG. 4 shows a flow chart of a method for verifying smart contracts in a blockchain according to another embodiment of the present application.
FIG. 5 shows a flow chart of a method for verifying smart contracts in a blockchain according to another embodiment of the present application.
FIG. 6 shows a flow chart of a method for verifying smart contracts in a blockchain according to another embodiment of the present application.
FIG. 7 shows a flow chart of verifying the validity on a lightweight node of a method for verifying smart contracts in a blockchain according to another embodiment of the present application.
FIG. 8 shows a structural block diagram of an apparatus for verifying smart contracts in a blockchain according to an embodiment of the present application.
FIG. 9 shows a structural block diagram for an apparatus for verifying smart contracts in a blockchain according to another embodiment of the present application.
FIG. 10 shows a structural block diagram for an apparatus for verifying smart contracts in a blockchain according to another embodiment of the present application.

### DETAILED DESCRIPTION OF THE EMBODIMENTS

In the following, only certain exemplary embodiments are briefly described. As those skilled in the art would realize, the described embodiments may be modified in various different ways, all without departing from the spirit or scope of the present application. Accordingly, the drawings and description are to be regarded as illustrative in nature and not restrictive.

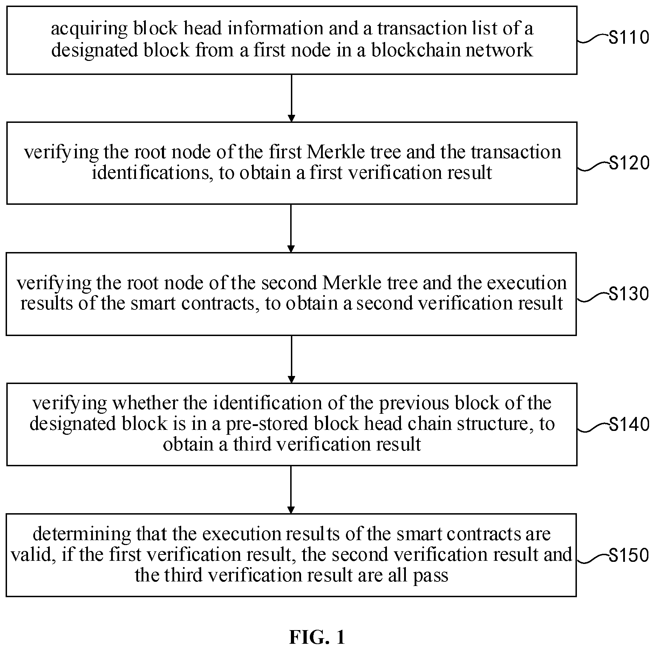

FIG. 1 shows a flow chart of a method for verifying smart contracts in a blockchain according to an embodiment of the present application. As shown in FIG. 1, the method includes: S110, acquiring block head information and a transaction list of a designated block from a first node in a blockchain network, wherein the transaction list includes transaction identifications and execution results of the smart contracts; and the block head information includes: a root node of a first Merkle tree, a root node of a second Merkle tree, and an identification of a previous block of the designated block; S120, verifying the root node of the first Merkle tree and the transaction identifications, to obtain a first verification result; S130, verifying the root node of the second Merkle tree and the execution results of the smart contracts, to obtain a second verification result; S140, verifying whether the identification of the previous block of the designated block is in a pre-stored block head chain structure, to obtain a third verification result; S150, determining that the execution results of the smart contracts are valid, if the first verification result, the second verification result and the third verification result are all pass. Leaf nodes of the first Merkel tree consist of all the transaction identifications of the designated block, and leaf nodes of the second Merkel tree consist of all the execution results of the smart contracts of the designated block.

A Merkle tree is an important data structure of a blockchain, which can quickly summarize block data and verify the existence and integrity of the block data. The Merkel tree usually contains an underlying (transaction) database of a block body, a root hash value (i.e. a Merkle root) of a block head, and all branches from the underlying block data to the root hash value. The operation process of the Merkle tree is generally to group and hash data of the block body, then insert the generated new hash values into the Merkle tree, and operate recursively until only one root hash value is finally left and recorded as the Merkle root of the block head. The most common Merkel tree is a binary Merkel tree used in Bitcoin. Each hash node in the binary Merkel tree always contains two adjacent data blocks or two hash values.

There are some lightweight nodes in the blockchain network, such as mobile clients. The storage space of lightweight nodes is limited and the hardware capability is weak. It is necessary to seek a feasible method to verify the validity of the execution results of the smart contracts on a lightweight node, newly synchronized from the network. A method for helping a lightweight node determine the validity of execution results of smart contracts in a blockchain network is provided according to an embodiment of the present application. The verification method according to the embodiment of the application includes:
S120, verifying whether the root node of the first Merkel tree in the block head information matches the transaction identifications in the transaction list;
S130, verifying whether the root node of the second Merkel tree in the block head information matches the execution results of the smart contracts in the transaction list; and
S140, verifying whether the identification of the previous block of the designated block in the block head information is in the pre-stored block head chain structure.

The performance sequence of S120 and S130 can be interchanged. Alternatively, in another embodiment, S120 and S130 can be performed in parallel.

The embodiment of the application can be applied to any lightweight node using the blockchain technology, and the lightweight node includes but is not limited to a mobile client device.

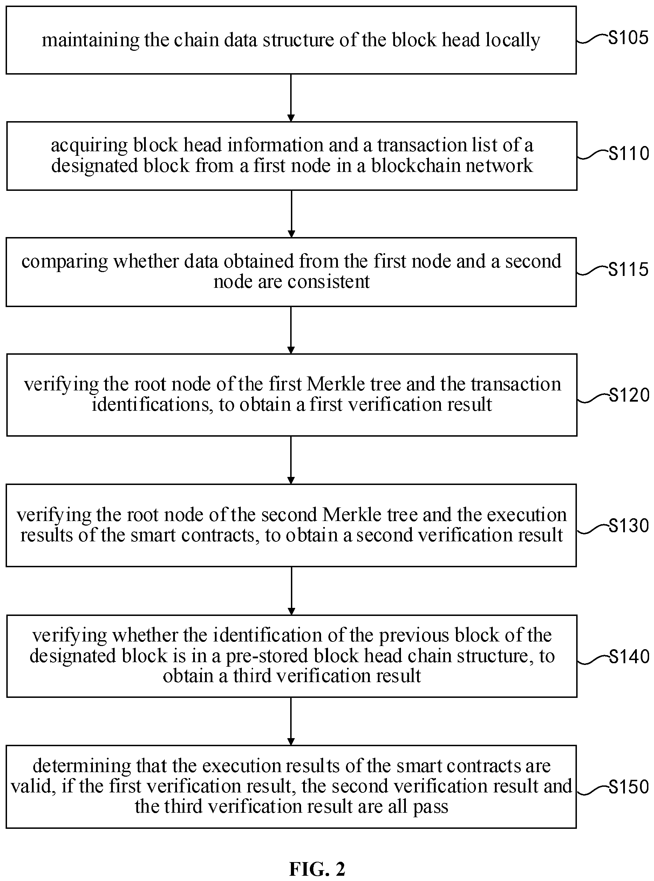

FIG. 2 shows a flow chart of a method for verifying smart contracts in a blockchain according to another embodiment of the present application. As shown in FIG. 2, specific implementation steps of the embodiment of the present application are as follows.

In S105, the chain data structure of the block head is maintained locally.
A. The block head contains the following data:
   i. a block head identification (id);
   ii. a previous block id;
   iii. a root node hash (hash value) of the first Merkle tree;
   iv. a root node hash of the second Merkle tree.
B. Each block head points to the block head of the previous block, thus maintaining the chain data structure. The previous block identification pointed to by the block head of the genesis block is 0.

The leaf nodes at the bottom of the first Merkel tree consist of all the transaction identifications of Unspent Transaction Output (UTXO) contained in the block. The transaction identifications are obtained by hashing the transaction contents, but the execution results of the smart contracts are not included in the transaction contents.

The leaf nodes at the bottom of the second Merkel tree consist of the execution results of all the smart contracts contained in the block. If a transaction involves the execution of a smart contract, the execution result of the smart contract will be stored in a new field. These new fields make up a Merkel tree.

The execution result of a smart contract involved in each transaction consists of two parts as follows.

v-1. The root node of a Merkle tree. Every time a virtual machine (VM) executes a smart contract involved in a transaction, it will modify a data structure storing the data content of the smart contract. All the data make up this Merkel tree.

v-2. The execution result generated after the execution of the smart contract involved in this transaction.

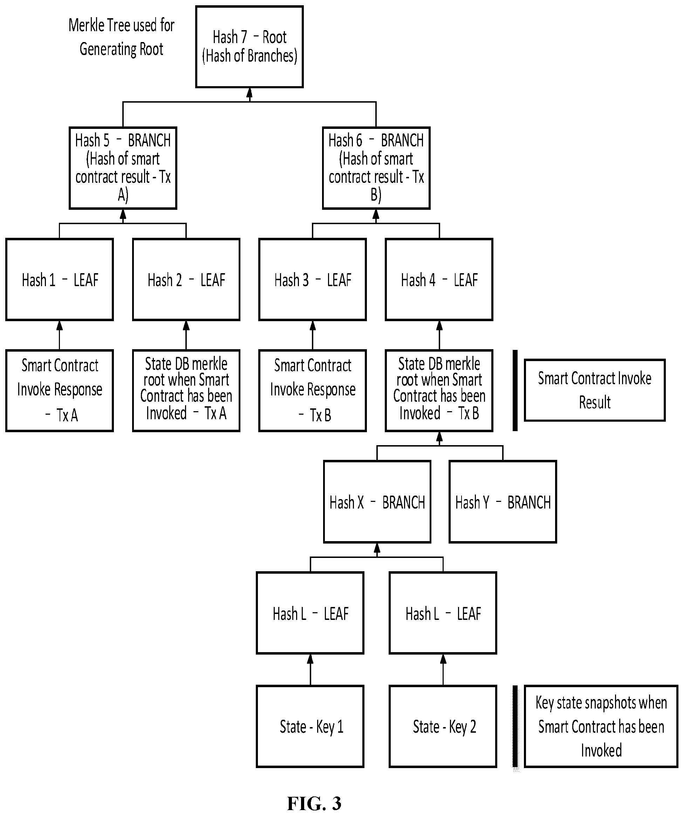

FIG. 3 shows a flow chart of calculating the second Merkel tree by a full node in a method for verifying smart contracts in a blockchain according to another embodiment of the present application. In FIG.3, State-key indicates the state and key data corresponding to the execution result of a smart contract. "Key state snapshots when Smart Contract has been Invoked" represents a snapshot of the state and key data corresponding to the execution result generated after the execution of the smart contract. State-key 1 and state-key2 are hashed respectively, to get two leaf nodes hash L-LEAF. Then the two leaf nodes hash L-LEAF are hashed to get a branch node hash X-BRANCH. Then two branch nodes, hash X-BRANCH and hash Y-BRANCH, are hashed to generate the root node of the Merkel tree in the above v-1, i.e. "State DB Merkle root when Smart Contract has been Invoked-Tx B (the database of the Merkel tree root value after the execution of a smart contract B)". "Smart Contract Invoke Result" indicates the execution result of the smart contract. "Smart Contract Invoke Response - TX B" indicates the execution result of the smart contract B. "State DB Merkle root when Smart Contract has been Invoked-Tx B" is hashed to get Hash 4- LEAF, "Smart Contract Invoke Response - Tx B" is hashed to get Hash 3-LEAF, then Hash 4- LEAF and Hash 3-LEAF are hashed to get a branch node "Hash 6 - BRANCH (Hash of smart contract result - Tx B, i.e. the hash value of the execution result of the smart contract B)". Finally, Hash 6-BRANCH and "Hash 5 - BRANCH (Hash of smart contract result - Tx A, i.e. the hash value of the execution result of a smart contract A)" are hashed to get the root node "Hash 7 -Root (Hash of Branches, i.e. the hash value of the branch)". "Merkle Tree used for Generating Root" indicates a Merkle tree for generating a root node.

In S110, a block head and a transaction list of a designated block is acquired by data synchronization through a first node randomly selected from a blockchain network or designated by a user. X is used to indicate the designated block, and partial information of the block X is obtained in this step, including: block head, UTXO transaction list (including transaction ids, execution results of smart contracts involved in transactions, etc.). The first node is a full node in the blockchain network.

In S115, whether data obtained from the first node and a second node are consistent is compared.

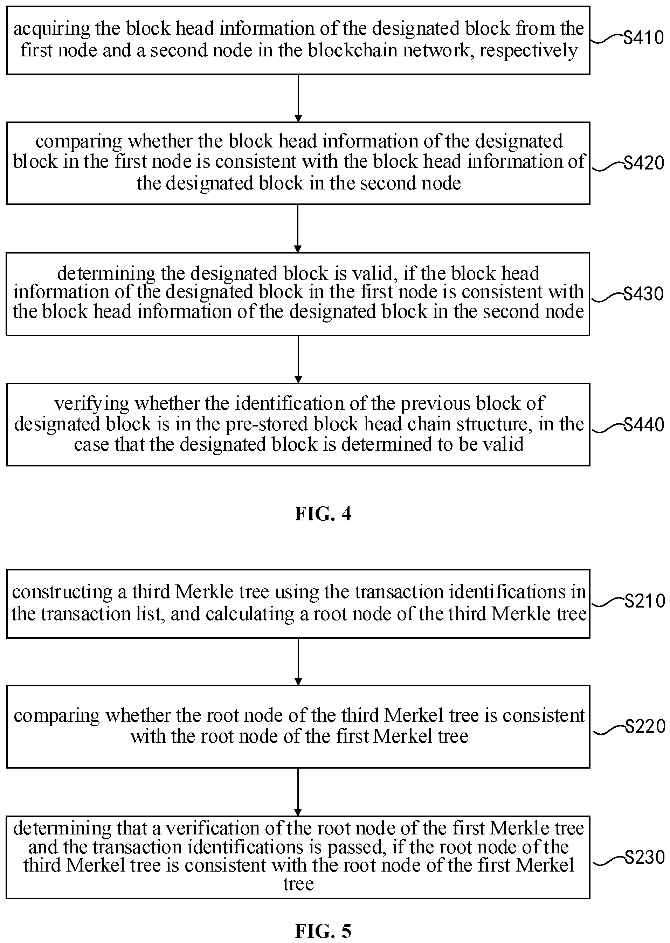

FIG. 4 shows a flow chart of a method for verifying smart contracts in a blockchain according to another embodiment of the present application. As shown in FIG. 2, before S140, verifying whether the identification of the previous block of the designated block is in a pre-stored block head chain structure, S 115 is executed. As shown in FIG. 4, S 115 specifically may include: S410, acquiring the block head information of the designated block from the first node and a second node in the blockchain network, respectively; S420, comparing whether the block head information of the designated block in the first node is consistent with the block head information of the designated block in the second node; S430, determining the designated block is valid, if the block head information of the designated block in the first node is consistent with the block head information of the designated block in the second node; S440, verifying whether the identification of the previous block of designated block is in the pre-stored block head chain structure, in the case that the designated block is determined to be valid.

In an example, S115 may specifically include the steps as follows.

The second node is then randomly selected from the blockchain network or designated by the user for query. The query condition is the block id contained in the head of the block X obtained in S110. Then, according to the target block id, the block head Z corresponding to the block X is queried in the second node. The second node is a full node in the blockchain network.

It is compared whether the tree root of the first Merkel tree, the tree root of the second Merkel tree, and the previous block id match the information of the block head Z obtained from the second node. It means the block X is true and valid, if they match.

FIG. 5 shows a flow chart of a method for verifying smart contracts in a blockchain according to another embodiment of the present application. As shown in FIG.5, in a possible embodiment, S120, verifying the root node of the first Merkle tree and the transaction identifications, may specifically include: S210, constructing a third Merkle tree using the transaction identifications in the transaction list, and calculating a root node of the third Merkle tree; S220, comparing whether the root node of the third Merkel tree is consistent with the root node of the first Merkel tree; S230, determining that a verification of the root node of the first Merkle tree and the transaction identifications is passed, if the root node of the third Merkel tree is consistent with the root node of the first Merkel tree.

Specifically, whether the block head of the block X matches the transaction id list thereof is verified. The transaction ids form a Merkel tree, i.e. the third Merkel tree, and its final Merkel tree root is calculated. Then it is compared whether the calculated root of the third Merkel tree is consistent with the root node hash of the first Merkel tree contained in the block head. If they are consistent, it indicates that the block head of the check block X matches the transaction id list, that is, the root node of the first Merkel tree matches the transaction ids, and the verification of the root node of the first Merkel tree and the transaction id is passed.

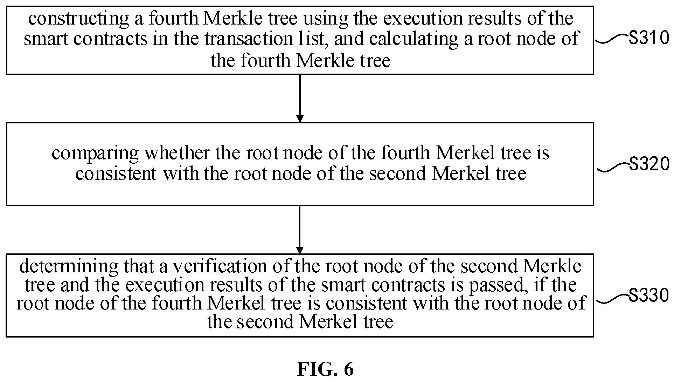

FIG. 6 shows a flow chart of a method for verifying smart contracts in a blockchain according to another embodiment of the present application. As shown in FIG. 6, in a possible embodiment, S130, verifying the root node of the second Merkle tree and the execution results of the smart contracts, may specifically include: S310, constructing a fourth Merkle tree using the execution results of the smart contracts in the transaction list, and calculating a root node of the fourth Merkle tree; S320, comparing whether the root node of the fourth Merkel tree is consistent with the root node of the second Merkel tree; S330, determining that a verification of the root node of the second Merkle tree and the execution results of the smart contracts is passed, if the root node of the fourth Merkel tree is consistent with the root node of the second Merkel tree.

Specifically, whether the block head of the check block X matches the smart contract execution result list thereof is verified. The execution results of the smart contracts form a Merkel tree, i.e. the fourth Merkel tree, and its final Merkel tree root is calculated. Then it is compared whether the calculated root of the fourth Merkel tree is consistent with the root node of the second Merkel tree contained in the block head. If they are consistent, the block head of block X matches the smart contract execution result list, that is, the root node of the second Merkel tree matches the execution results of the smart contracts, and the verification of the root node of the second Merkel tree and the execution results of the smart contracts is passed.

In S140, it is determined whether the previous block id contained in the block head of block X is in a locally maintained block head chain structure.

In S150, the execution results of the smart contracts are determined to be valid, if verifications of S115, S120, S130 and S140 above are passed. If in the last verification step S140, it is determined that the previous block id contained in the block head of the block X is in the locally maintained block head chain structure, then the real and effective block head of the block X is saved to a locally maintained block head chain database.

In above steps, S115 is an execution step that may be omitted. In a scenario where the response time for verification is relatively high, S115 may not be executed.

In addition, S115, S120, and S130 may be executed interchangeably. Alternatively, in another embodiment, S115, S120, and S130 may be executed in parallel. S140 is performed after these three steps are completed.

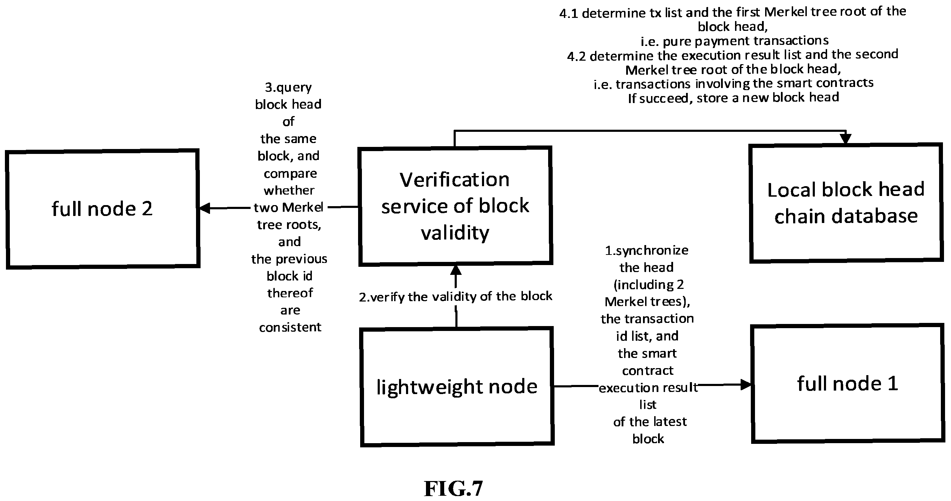

FIG. 7 shows a flow chart of verifying the validity on a lightweight node of a method for verifying smart contracts in a blockchain according to another embodiment of the present application. As shown in FIG.7, in an example, the specific implementation steps of a method for verifying smart contracts in a blockchain are as follows.
1. A lightweight node synchronizes the head (including 2 Merkel trees), and the transaction id list, the smart contract execution result list of the latest block from a full node 1.
2. The validity of the block is verified. The specific steps of verification may include the above S115, S120, S130 and S140.
3. The block head of the same block is queried in a full node 2, and it is compared whether two Merkel tree roots, and the previous block id pointed to are consistent with the data synchronized from the full node 1. The specific steps of the comparison may include the above step S115.
4. The transaction id list and the execution results of the smart contracts are verified.
   4.1 It is determined whether the transaction (tx) ID list matches the first Merkel tree root of the block head, for example, pure payment transactions are verified.
   4.2 It is determined whether the smart contract execution result list matches the second Merkel tree root of the block head, for example, transactions involving the smart contracts are verified.

If all the above steps are verified successfully, a new real effective block head is stored.

The above technical solutions has the following advantages or beneficial effects: it not required to download or store the complete block information, nor is it required to repeat the execution of the smart contracts locally on a lightweight client, which can help the lightweight node determine the validity of the execution results of the smart contracts in the blockchain network, thereby saving system resources and improving the execution efficiency.

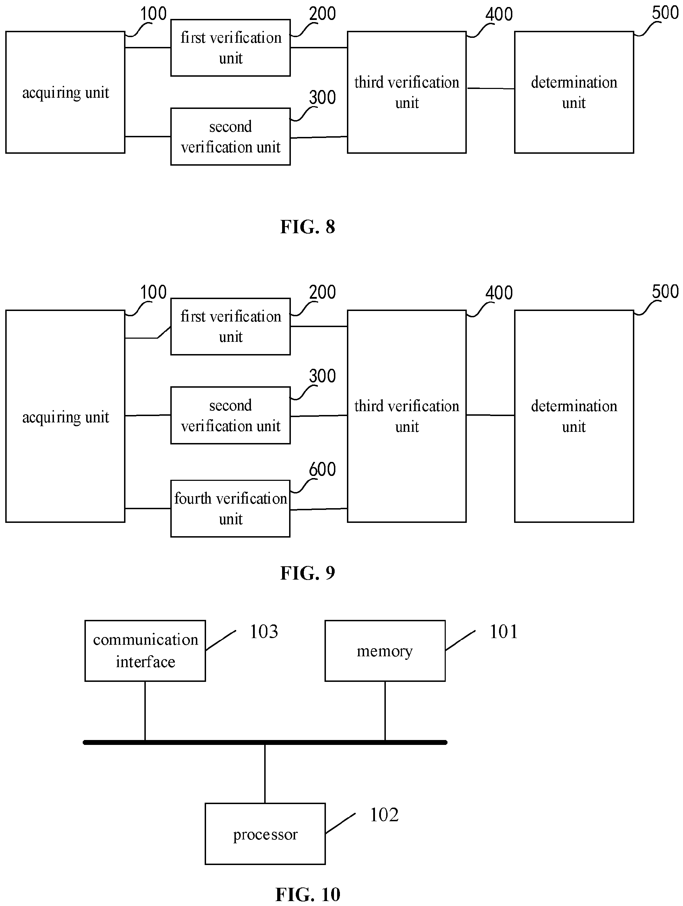

FIG. 8 shows a structural block diagram of an apparatus for verifying smart contracts in a blockchain according to an embodiment of the present application. As shown in FIG. 8, the apparatus includes: an acquiring unit 100, configured to acquire block head information and a transaction list of a designated block from a first node in a blockchain network, wherein the transaction list includes transaction identifications and execution results of the smart contracts; and the block head information includes: a root node of a first Merkle tree, a root node of a second Merkle tree, and an identification of a previous block of the designated block; a first verification unit 200, configured to verify the root node of the first Merkle tree and the transaction identifications, to obtain a first verification result; a second verification unit 300, configured to verify the root node of the second Merkle tree and the execution results of the smart contracts, to obtain a second verification result; a third verification unit 400, configured to verify whether the identification of the previous block of the designated block is in a pre-stored block head chain structure, to obtain a third verification result; a determination unit 500, configured to: determining determine that the execution results of the smart contracts are valid, if the first verification result, the second verification result and the third verification result are all pass. The leaf nodes of the first Merkel tree consist of all the transaction identifications of the designated block, and the leaf nodes of the second Merkel tree consist of all the execution results of the smart contracts of the designated block.

In an embodiment, the first verification unit 200 is further configured to: construct a third Merkle tree using the transaction identifications in the transaction list, and calculate a root node of the third Merkle tree; compare whether the root node of the third Merkel tree is consistent with the root node of the first Merkel tree; and determine that a verification of the root node of the first Merkle tree and the transaction identifications is passed, if the root node of the third Merkel tree is consistent with the root node of the first Merkel tree.

In an embodiment, the second verification unit 300 is further configured to: construct a fourth Merkle tree using the execution results of the smart contracts in the transaction list, and calculate a root node of the fourth Merkle tree; compare whether the root node of the fourth Merkel tree is consistent with the root node of the second Merkel tree; and determine that a verification of the root node of the second Merkle tree and the execution results of the smart contracts is passed, if the root node of the fourth Merkel tree is consistent with the root node of the second Merkel tree.

FIG. 9 shows a structural block diagram for an apparatus for verifying smart contracts in a blockchain according to another embodiment of the present application. As shown in FIG. 9, in an embodiment, the apparatus further includes a fourth verification unit 600, configured to: acquire the block head information of the designated block from the first node and a second node in the blockchain network, respectively; compare whether the block head information of the designated block in the first node is consistent with the block head information of the designated block in the second node; determine the designated block is valid, if the block head information of the designated block in the first node is consistent with the block head information of the designated block in the second node; and verify whether the identification of the previous block of the designated block is in the pre-stored block head chain structure, in the case that the designated block is determined to be valid.

The functions of units in the apparatus may refer to the relevant description of the above method, which will not be described here anymore.

In a possible design, the apparatus structurally includes a processor and a memory, wherein the memory is configured to store programs which support the apparatus to execute the above method, and the processor is configured to execute the programs stored in the memory. The apparatus may further include a communication interface through which the apparatus communicates with other devices or communication networks.

FIG. 10 shows a structural block diagram for an apparatus for verifying smart contracts in a blockchain according to another embodiment of the present application. As shown in FIG. 10, the apparatus includes: a memory 101 and a processor 102. The memory 101 stores a computer program executable on the processor 102. When the processor 102 executes the computer program, the above method in any of the foregoing embodiments is implemented. The number of the memory 101 and the processor 102 may be one or more.

The apparatus further includes a communication interface 103 configured to communicate and exchange data with external devices.

The memory 101 may include a high-speed RAM memory and may also include a non-volatile memory, such as at least one magnetic disk memory.

If the memory 101, the processor 102, and the communication interface 103 are implemented independently, the memory 101, the processor 102, and the communication interface 103 may be connected to each other through a bus and communicate with one another. The bus may be an Industry Standard Architecture (ISA) bus, a Peripheral Component Interconnect (PCI) bus, an Extended Industry Standard Architecture (EISA) bus, or the like. The bus may be divided into an address bus, a data bus, a control bus, and the like. For ease of illustration, only one bold line is shown in FIG. 10, but it does not mean that there is only one bus or one type of bus.

Optionally, in a specific implementation, if the memory 101, the processor 102, and the communication interface 103 are integrated on one chip, the memory 101, the processor 102, and the communication interface 103 may implement mutual communication through an internal interface.

In another aspect, a non-volatile computer readable storage medium is provided according to an embodiment of the application, which stores a computer program, wherein the program, when executed by a processor, causes the processor to implement any of the above methods.

In the description of the specification, the description of the terms "one embodiment," "some embodiments," "an example," "a specific example," or "some examples" and the like means the specific features, structures, materials, or characteristics described in connection with the embodiment or example are included in at least one embodiment or example of the present application. Furthermore, the specific features, structures, materials, or characteristics described may be combined in any suitable manner in any one or more of the embodiments or examples. In addition, different embodiments or examples described in this specification and features of different embodiments or examples may be incorporated and combined by those skilled in the art without mutual contradiction.

In addition, the terms "first" and "second" are used for descriptive purposes only and are not to be construed as indicating or implying relative importance or implicitly indicating the number of indicated technical features. Thus, features defining "first" and "second" may explicitly or implicitly include at least one of the features. In the description of the present application, "a plurality of" means two or more, unless expressly restricted otherwise.

Any process or method description in a flowchart or otherwise described herein can be understood as a module, fragment, or portion of code that includes one or more executable instructions for implementing a particular logical function or step of a process. And, the scope of the preferred embodiments of the present application includes additional implementations in which the functions may be performed out of the order shown or discussed, including performing functions in a substantially simultaneous manner or in the reverse order according to the functions involved. It is understood by those skilled in the art to which the embodiments of the present application pertain.

Logic and/or steps represented in a flowchart or otherwise described herein, for example, a sequenced list of executable instructions that may be considered to implement a logical function, may be embodied in any computer-readable medium, for use by or in combination with an instruction execution system, apparatus, or device (such as a computer-based system, a system including a processor, or another system that can fetch and execute instructions from an instruction execution system, apparatus, or device) or equipment For the purposes of this specification, a "computer-readable medium" may be any device that may contain, store, communicate, propagate, or transport a program for use by or in connection with the instruction execution system, apparatus, or device. More specific examples (not a non-exhaustive list) of the computer-readable media include the following: electrical connections (electronic devices) having one or more wires, a portable computer disk cartridge (magnetic device), random access memory (RAM), read only memory (ROM), erasable programmable read only memory (EPROM or flash memory), optical fiber devices, and portable read only memory (CDROM). In addition, the computer-readable medium may even be paper or other suitable medium upon which the program may be printed, as it may be read, for example, by optical scanning of the paper or other medium, followed by editing, interpretation or, where appropriate, process otherwise to electronically obtain the program, which is then stored in a computer memory.

It should be understood that various portions of the present application may be implemented by hardware, software, firmware, or a combination thereof. In the above embodiments, multiple steps or methods may be implemented in software or firmware stored in memory and executed by a suitable instruction execution system. For example, if implemented in hardware, as in another embodiment, they may be implemented using any one or a combination of the following techniques well known in the art: discrete logic circuits having logic gate circuits for implementing logic functions on data signals, application specific integrated circuits with suitable combinational logic gate circuits, programmable gate arrays (PGA), field programmable gate arrays (FPGAs), and the like.

Those skilled in the art may understand that all or some of the steps carried in the methods in the foregoing embodiments may be implemented by a program instructing relevant hardware. The program may be stored in a computer-readable storage medium, and when executed, one of the steps of the method embodiment or a combination thereof is included.

In addition, functional units in the embodiments of the present application may be integrated in one processing module, or each of the units may exist alone physically, or two or more units may be integrated in one module. The above-mentioned integrated module may be implemented in the form of hardware or in the form of software functional module. When the integrated module is implemented in the form of a software functional module and is sold or used as an independent product, the integrated module may also be stored in a computer-readable storage medium. The storage medium may be a read only memory, a magnetic disk, an optical disk, or the like.

The foregoing descriptions are merely specific embodiments of the present application, but not intended to limit the protection scope of the present application. Those skilled in the art may easily conceive of various changes or modifications within the technical scope disclosed herein, all these should be covered within the protection scope of the present application. Therefore, the protection scope of the present application should be subject to the protection scope of the claims.

## Claims

1. A method for verifying smart contracts in a blockchain, comprising:
acquiring (S110) block head information and a transaction list of a designated block from a first node in a blockchain network, wherein the transaction list comprises transaction identifications and execution results of the smart contracts; and the block head information comprises: a root node of a first Merkle tree, a root node of a second Merkle tree, and an identification of a previous block of the designated block;
verifying (S120) the root node of the first Merkle tree and the transaction identifications, to obtain a first verification result;
verifying (S130) the root node of the second Merkle tree and the execution results of the smart contracts, to obtain a second verification result;
verifying (S140) whether the identification of the previous block of the designated block is in a pre-stored block head chain structure, to obtain a third verification result; and
determining (S150) that the execution results of the smart contracts are valid, if the first verification result, the second verification result and the third verification result are all pass.

2. The method according to claim 1, wherein the verifying the root node of the first Merkle tree and the transaction identifications, comprises:
constructing (S210) a third Merkle tree using the transaction identifications in the transaction list, and calculating a root node of the third Merkle tree;
comparing (S220) whether the root node of the third Merkel tree is consistent with the root node of the first Merkel tree; and
determining (S230) that a verification of the root node of the first Merkle tree and the transaction identifications is passed, if the root node of the third Merkel tree is consistent with the root node of the first Merkel tree.

3. The method according to claim 1, wherein the verifying the root node of the second Merkle tree and the execution results of the smart contracts, comprises:
constructing (S310) a fourth Merkle tree using the execution results of the smart contracts in the transaction list, and calculating a root node of the fourth Merkle tree;
comparing (S320) whether the root node of the fourth Merkel tree is consistent with the root node of the second Merkel tree; and
determining (S330) that a verification of the root node of the second Merkle tree and the execution results of the smart contracts is passed, if the root node of the fourth Merkel tree is consistent with the root node of the second Merkel tree.

4. The method according to any one of claims 1 to 3, wherein before verifying whether the identification of the previous block of the designated block is in a pre-stored block head chain structure, the method further comprises:
acquiring (S410) the block head information of the designated block from the first node and a second node in the blockchain network, respectively;
comparing (S420) whether the block head information of the designated block in the first node is consistent with the block head information of the designated block in the second node;
determining (S430) the designated block is valid, if the block head information of the designated block in the first node is consistent with the block head information of the designated block in the second node; and
verifying (S440) whether the identification of the previous block of the designated block is in the pre-stored block head chain structure, in a case that the designated block is determined to be valid.

5. An apparatus for verifying smart contracts in a blockchain, comprising:
an acquiring unit (100), configured to acquire block head information and a transaction list of a designated block from a first node in a blockchain network, wherein the transaction list comprises transaction identifications and execution results of the smart contracts; and the block head information comprises: a root node of a first Merkle tree, a root node of a second Merkle tree, and an identification of a previous block of the designated block;
a first verification unit (200), configured to verify the root node of the first Merkle tree and the transaction identifications, to obtain a first verification result;
a second verification unit (300), configured to verify the root node of the second Merkle tree and the execution results of the smart contracts, to obtain a second verification result;
a third verification unit (400), configured to verify whether the identification of the previous block of the designated block is in a pre-stored block head chain structure, to obtain a third verification result; and
a determination unit (500), configured to determine that the execution results of the smart contracts are valid, if the first verification result, the second verification result and the third verification result are all pass.

6. The apparatus according to claim 5, wherein the first verification unit (200) is further configured to:
construct a third Merkle tree using the transaction identifications in the transaction list, and calculate a root node of the third Merkle tree;
compare whether the root node of the third Merkel tree is consistent with the root node of the first Merkel tree; and
determine that a verification of the root node of the first Merkle tree and the transaction identifications is passed, if the root node of the third Merkel tree is consistent with the root node of the first Merkel tree.

7. The apparatus according to claim 5, wherein the second verification unit (300) is further configured to:
construct a fourth Merkle tree using the execution results of the smart contracts in the transaction list, and calculate a root node of the fourth Merkle tree;
compare whether the root node of the fourth Merkel tree is consistent with the root node of the second Merkel tree; and
determine that a verification of the root node of the second Merkle tree and the execution results of the smart contracts is passed, if the root node of the fourth Merkel tree is consistent with the root node of the second Merkel tree.

8. The apparatus according to any one of claims 5 to 7, further comprising a fourth verification unit (400), configured to:
acquire the block head information of the designated block from the first node and a second node in the blockchain network, respectively;
compare whether the block head information of the designated block in the first node is consistent with the block head information of the designated block in the second node;
determine the designated block is valid, if the block head information of the designated block in the first node is consistent with the block head information of the designated block in the second node; and
verify whether the identification of the previous block of the designated block is in the pre-stored block head chain structure, in a case that the designated block is determined to be valid.

9. A non-volatile computer readable storage medium storing a computer program, wherein the program, when executed by a processor, causes the processor to implement the method according to any one of claims 1 to 4.

10. A computer program product comprising computer executable instructions, wherein the computer executable instructions, when executed by a computer, causes the computer to implement the method according to any one of claims 1 to 4.

## Patentansprüche

1. Verfahren zur Verifizierung von Smart Contracts in einer Blockchain, umfassend:
Erfassen (S110) von Block Head-Informationen und einer Transaktionsliste eines designierten Blocks von einem ersten Knoten in einem Blockchain-Netzwerk, wobei die Transaktionsliste Transaktionserkennungen und Ausführungsergebnisse der Smart Contracts umfasst; und
die Block Head-Informationen umfassen: Einen Wurzelknoten eines ersten Hash-Baums, einen Wurzelknoten eines zweiten Hash-Baums und eine Erkennung eines vorherigen Blocks des designierten Blocks;
Verifizierung (S120) des Wurzelknotens des ersten Hash-Baums und der Transaktionserkennungen, um ein erstes Verifizierungsergebnis zu erhalten;
Verifizierung (S130) des Wurzelknotens des zweiten Hash-Baums und der Ausführungsergebnisse der Smart Contracts, um ein zweites Verifizierungsergebnis zu erhalten;
Verifizierung (S140), ob sich die Erkennung des vorherigen Blocks des designierten Blocks in einer vorgespeicherten Block Head-Kettenstruktur befindet, um ein drittes Verifizierungsergebnis zu erhalten; und
Bestimmen (S150), dass die Ausführungsergebnisse der Smart Contracts gültig sind, wenn das erste Verifizierungsergebnis, das zweite Verifizierungsergebnis und das dritte Verifizierungsergebnis alle erfolgreich sind.

2. Verfahren nach Anspruch 1, wobei die Verifizierung des Wurzelknotens des ersten Hash-Baums und der Transaktionserkennungen umfasst:
Erstellen (S210) eines dritten Hash-Baums unter Verwendung der Transaktionserkennungen in der Transaktionsliste, und Berechnen eines Wurzelknotens des dritten Hash-Baums;
Vergleichen (S220), ob der Wurzelknoten des dritten Hash-Baums konsistent ist mit dem Wurzelknoten des ersten Hash-Baums; und
Bestimmen (S230), dass eine Verifizierung des Wurzelknotens des ersten Hash-Baums und der Transaktionserkennungen erfolgreich ist, wenn der Wurzelknoten des dritten Hash-Baums konsistent ist mit dem Wurzelknoten des ersten Hash-Baums.

3. Verfahren nach Anspruch 1, wobei die Verifizierung des Wurzelknotens des zweiten Hash-Baums und der Ausführungsergebnisse der Smart Contracts umfasst:
Erstellen (S310) eines vierten Hash-Baums unter Verwendung der Ausführungsergebnisse der Smart Contracts in der Transaktionsliste, und Berechnen eines Wurzelknotens des vierten Hash-Baums;
Vergleichen (S320), ob der Wurzelknoten des vierten Hash-Baums konsistent ist mit dem Wurzelknoten des zweiten Hash-Baums; und
Bestimmen (S330), dass eine Verifizierung des Wurzelknotens des zweiten Hash-Baums und der Ausführungsergebnisse der Smart Contracts erfolgreich ist, wenn der Wurzelknoten des vierten Hash-Baums konsistent ist mit dem Wurzelknoten des zweiten Hash-Baums.

4. Verfahren nach einem der Ansprüche 1 bis 3, wobei vor der Verifizierung, ob sich die Erkennung des vorherigen Blocks des designierten Blocks in einer vorgespeicherten Block Head-Kettenstruktur befindet, das Verfahren ferner umfasst:
Erfassen (S410) der Block Head-Informationen des designierten Blocks vom ersten Knoten beziehungsweise einem zweiten Knoten im Blockchain-Netzwerk,
Vergleichen (S420), ob die Block Head-Informationen des designierten Blocks im ersten Knoten konsistent sind mit den Block Head-Informationen des designierten Blocks im zweiten Knoten,
Bestimmen (S430), dass der designierte Block gültig ist, wenn die Block Head-Informationen des designierten Blocks im ersten Knoten konsistent sind mit den Block Head-Informationen des designierten Blocks im zweiten Knoten; und
Verifizierung (S440), ob die Erkennung des vorherigen Blocks des designierten Blocks in der vorgespeicherten Block Head-Kettenstruktur enthalten ist, falls bestimmt wird, dass der designierte Block gültig ist.

5. Vorrichtung zur Verifizierung von Smart Contracts in einer Blockchain, umfassend:
eine Erfassungseinheit (100), konfiguriert, um Block Head-Informationen und eine Transaktionsliste eines designierten Blocks von einem ersten Knoten in einem Blockchain-Netzwerk zu erfassen, wobei die Transaktionsliste Transaktionserkennungen und Ausführungsergebnisse der Smart Contracts umfasst; und
die Block Head-Informationen umfassen: Einen Wurzelknoten eines ersten Hash-Baums, einen Wurzelknoten eines zweiten Hash-Baums und eine Erkennung eines vorherigen Blocks des designierten Blocks;
eine erste Verifizierungseinheit (200), konfiguriert, um den Wurzelknoten des ersten Hash-Baums und die Transaktionserkennungen zu verifizieren, um ein erstes Verifizierungsergebnis zu erhalten;
eine zweite Verifizierungseinheit (300), konfiguriert, um den Wurzelknoten des zweiten Hash-Baums und die Ausführungsergebnisse der Smart Contracts zu verifizieren, um ein zweites Verifizierungsergebnis zu erhalten;
eine dritte Verifizierungseinheit (400), konfiguriert, um zu verifizieren, ob sich die Erkennung des vorherigen Blocks des designierten Blocks in einer vorgespeicherten Block Head-Kettenstruktur befindet, um ein drittes Verifizierungsergebnis zu erhalten; und
eine Bestimmungseinheit (500), konfiguriert, um zu bestimmen, dass die Ausführungsergebnisse der Smart Contracts gültig sind, wenn das erste Verifizierungsergebnis, das zweite Verifizierungsergebnis und das dritte Verifizierungsergebnis alle erfolgreich sind.

6. Vorrichtung nach Anspruch 5, wobei die erste Verifizierungseinheit (200) ferner konfiguriert ist, zum:
Erstellen eines dritten Hash-Baums unter Verwendung der Transaktionserkennungen in der Transaktionsliste, und Berechnen eines Wurzelknotens des dritten Hash-Baums;
Vergleichen, ob der Wurzelknoten des dritten Hash-Baums konsistent ist mit dem Wurzelknoten des ersten Hash-Baums; und
Bestimmen, dass eine Verifizierung des Wurzelknotens des ersten Hash-Baums und der Transaktionserkennungen erfolgreich ist, wenn der Wurzelknoten des dritten Hash-Baums konsistent ist mit dem Wurzelknoten des ersten Hash-Baums.

7. Vorrichtung nach Anspruch 5, wobei die zweite Verifizierungseinheit (300) ferner konfiguriert ist, zum:
Erstellen eines vierten Hash-Baums unter Verwendung der Ausführungsergebnisse der Smart Contracts in der Transaktionsliste, und Berechnen eines Wurzelknotens des vierten Hash-Baums,
Vergleichen, ob der Wurzelknoten des vierten Hash-Baums konsistent ist mit dem Wurzelknoten des zweiten Hash-Baums; und
Bestimmen, dass eine Verifizierung des Wurzelknotens des zweiten Hash-Baums und der Ausführungsergebnisse der Smart Contracts erfolgreich ist, wenn der Wurzelknoten des vierten Hash-Baums konsistent ist mit dem Wurzelknoten des zweiten Hash-Baums.

8. Vorrichtung nach einem der Ansprüche 5 bis 7, ferner eine vierte Verifizierungseinheit (400) umfassend, konfiguriert, zum:
Erfassen der Block Head-Informationen des designierten Blocks vom ersten Knoten beziehungsweise einem zweiten Knoten im Blockchain-Netzwerk;
Vergleichen, ob die Block Head-Informationen des designierten Blocks im ersten Knoten konsistent sind mit den Block Head-Informationen des designierten Blocks im zweiten Knoten;
Bestimmen, dass der designierte Block gültig ist, wenn die Block Head-Informationen des designierten Blocks im ersten Knoten konsistent sind mit den Block Head-Informationen des designierten Blocks im zweiten Knoten; und
Verifizieren, ob die Erkennung des vorherigen Blocks des designierten Blocks in der vorgespeicherten Block Head-Kettenstruktur enthalten ist, falls bestimmt wird, dass der designierte Block gültig ist.

9. Nichtflüchtiges computerlesbares Speichermedium, das ein Computerprogramm speichert, wobei das Programm, wenn es von einem Prozessor ausgeführt wird, den Prozessor veranlasst, das Verfahren nach einem der Ansprüche 1 bis 4 zu implementieren.

10. Computerprogrammprodukt, das computerausführbare Befehle umfasst, wobei die computerausführbaren Befehle, wenn sie von einem Computer ausgeführt werden, den Computer veranlassen, das Verfahren nach einem der Ansprüche 1 bis 4 zu implementieren.

## Revendications

1. Procédé pour la vérification de contrats intelligents dans une chaîne de blocs, comprenant
l'acquisition (S110) d'une information d'en-tête de bloc et d'une liste de transactions d'un bloc désigné auprès d'un premier nœud dans un réseau de chaînes de blocs, dans lequel la liste de transactions comprend des identifications de transaction et des résultats d'exécution des contrats intelligents ; et l'information d'en-tête de bloc comprend : un nœud racine d'un premier arbre de Merkle, un nœud racine d'un deuxième arbre de Merkle, et une identification d'un bloc précédent du bloc désigné ;
la vérification (S120) du nœud racine du premier arbre de Merkle et des identifications de transaction, pour obtenir un premier résultat de vérification ;
la vérification (S130) du nœud racine du deuxième arbre de Merkle et des résultats d'exécution des contrats intelligents, pour obtenir un deuxième résultat de vérification ;
la vérification (S140) de si l'identification du bloc précédent du bloc désigné est dans une structure de chaîne d'en-tête de bloc pré-stockée, pour obtenir un troisième résultat de vérification ; et
la détermination (S150) que les résultats d'exécution des contrats intelligents sont valides, si le premier résultat de vérification, le deuxième résultat de vérification et le troisième résultat de vérification sont tous passés avec succès.

2. Procédé selon la revendication 1, dans lequel la vérification du nœud racine du premier arbre de Merkle et des identifications de transaction comprend :
la construction (S210) d'un troisième arbre de Merkle à l'aide des identifications de transaction dans la liste de transactions, et le calcul d'un nœud racine du troisième arbre de Merkle ;
la comparaison (S220) de si le nœud racine du troisième arbre de Merkle est cohérent avec le nœud racine du premier arbre de Merkle ; et
la détermination (S230) qu'une vérification du nœud racine du premier arbre de Merkle et des identifications de transaction est passée avec succès, si le nœud racine du troisième arbre de Merkle est cohérent avec le nœud racine du premier arbre de Merkle.

3. Procédé selon la revendication 1, dans lequel la vérification du nœud racine du deuxième arbre de Merkle et des résultats d'exécution des contrats intelligents comprend :
la construction (S310) d'un quatrième arbre de Merkle à l'aide des résultats d'exécution des contrats intelligents dans la liste de transactions, et le calcul d'un nœud racine du quatrième arbre de Merkle ;
la comparaison (S320) de si le nœud racine du quatrième arbre de Merkle est cohérent avec le nœud racine du deuxième arbre de Merkle ; et
la détermination (S330) qu'une vérification du nœud racine du deuxième arbre de Merkle et des résultats d'exécution des contrats intelligents est passée avec succès, si le nœud racine du quatrième arbre de Merkle est cohérent avec le nœud racine du deuxième arbre de Merkle.

4. Procédé selon l'une quelconque des revendications 1 à 3, dans lequel avant la vérification de si l'identification du bloc précédent du bloc désigné est dans une structure de chaîne d'en-tête de bloc pré-stockée, le procédé comprend en outre :
l'acquisition (S410) de l'information d'en-tête de bloc du bloc désigné auprès du premier nœud et d'un deuxième nœud dans le réseau de chaînes de blocs, respectivement ;
la comparaison (S420) de si l'information d'en-tête de bloc du bloc désigné dans le premier nœud est cohérente avec l'information d'en-tête de bloc du bloc désigné dans le deuxième nœud ;
la détermination (S430) que le bloc désigné est valide, si l'information d'en-tête de bloc du bloc désigné dans le premier nœud est cohérente avec l'information d'entête de bloc du bloc désigné dans le deuxième nœud ; et
la vérification (S440) de si l'identification du bloc précédent du bloc désigné est dans la structure de chaîne d'en-tête de bloc pré-stockée, dans un cas où le bloc désigné est déterminé comme étant valide.

5. Appareil pour la vérification de contrats intelligents dans une chaîne de blocs, comprenant :
une unité d'acquisition (100), configurée pour acquérir une information d'en-tête de bloc et une liste de transactions d'un bloc désigné auprès d'un premier nœud dans un réseau de chaînes de blocs, dans lequel la liste de transactions comprend des identifications de transaction et des résultats d'exécution des contrats intelligents, et l'information d'en-tête de bloc comprend : un nœud racine d'un premier arbre de Merkle, un nœud racine d'un deuxième arbre de Merkle, et une identification d'un bloc précédent du bloc désigné ;
une première unité de vérification (200), configurée pour vérifier le nœud racine du premier arbre de Merkle et les identifications de transaction, pour obtenir un premier résultat de vérification ;
une deuxième unité de vérification (300), configurée pour vérifier le nœud racine du deuxième arbre de Merkle et les résultats d'exécution des contrats intelligents, pour obtenir un deuxième résultat de vérification ;
une troisième unité de vérification (400), configurée pour vérifier si l'identification du bloc précédent du bloc désigné est dans une structure de chaîne d'en-tête de bloc pré-stockée, pour obtenir un troisième résultat de vérification ; et
une unité de détermination (500), configurée pour déterminer que les résultats d'exécution des contrats intelligents sont valides, si le premier résultat de vérification, le deuxième résultat de vérification et le troisième résultat de vérification sont tous passés avec succès.

6. Appareil selon la revendication 5, dans lequel la première unité de vérification (200) est en outre configurée pour :
construire un troisième arbre de Merkle à l'aide des identifications de transaction dans la liste de transactions, et calculer un nœud racine du troisième arbre de Merkle ;
comparer si le nœud racine du troisième arbre de Merkle est cohérent avec le nœud racine du premier arbre de Merkle ; et
déterminer qu'une vérification du nœud racine du premier arbre de Merkle et des identifications de transaction est passée avec succès, si le nœud racine du troisième arbre de Merkle est cohérent avec le nœud racine du premier arbre de Merkle.

7. Appareil selon la revendication 5, dans lequel la deuxième unité de vérification (300) est en outre configurée pour :
construire un quatrième arbre de Merkle à l'aide des résultats d'exécution des contrats intelligents dans la liste de transactions, et calculer un nœud racine du quatrième arbre de Merkle ;
comparer si le nœud racine du quatrième arbre de Merkle est cohérent avec le nœud racine du deuxième arbre de Merkle ; et
déterminer qu'une vérification du nœud racine du deuxième arbre de Merkle et des résultats d'exécution des contrats intelligents est passée avec succès, si le nœud racine du quatrième arbre de Merkle est cohérent avec le nœud racine du deuxième arbre de Merkle.

8. Appareil selon l'une quelconque des revendications 5 à 7, comprenant en outre une quatrième unité de vérification (400), configurée pour :
acquérir l'information d'en-tête de bloc du bloc désigné auprès du premier nœud et d'un deuxième nœud dans le réseau de chaînes de blocs, respectivement ;
comparer si l'information d'en-tête de bloc du bloc désigné dans le premier nœud est cohérente avec l'information d'en-tête de bloc du bloc désigné dans le deuxième nœud ;
déterminer que le bloc désigné est valide, si l'information d'en-tête de bloc du bloc désigné dans le premier nœud est cohérente avec l'information d'en-tête de bloc du bloc désigné dans le deuxième nœud ; et
vérifier si l'identification du bloc précédent du bloc désigné est dans la structure de chaîne d'en-tête de bloc pré-stockée, dans un cas où le bloc désigné est déterminé comme étant valide.

9. Support de stockage non volatil lisible par ordinateur stockant un programme d'ordinateur, dans lequel le programme, lors de son exécution par un processeur, amène le processeur à mettre en œuvre le procédé selon l'une quelconque des revendications 1 à 4.

10. Produit programme d'ordinateur comprenant des instructions exécutables par ordinateur, dans lequel les instructions exécutables par ordinateur, lors de leur exécution par un ordinateur, amènent l'ordinateur à mettre en œuvre le procédé selon l'une quelconque des revendications 1 à 4.
